**Europäisches Patentamt**

**European Patent Office**

**Office européen des brevets**

(19)

(11) Veröffentlichungsnummer : **0 074 519 B2**

(12) # NEUE EUROPÄISCHE PATENTSCHRIFT

(45) Veröffentlichungstag der neuen Patentschrift :
**29.01.92 Patentblatt 92/05**

(51) Int. Cl.⁵ : **C08L 61/28,** C08K 3/24,
C08K 3/00

(21) Anmeldenummer : **82107687.4**

(22) Anmeldetag : **23.08.82**

(54) Ammoniumsulfit als Härtungsbeschleuniger für wässrige Melaminharzlösungen.

(30) Priorität : **11.09.81 DE 3135997**

(43) Veröffentlichungstag der Anmeldung :
**23.03.83 Patentblatt 83/12**

(45) Bekanntmachung des Hinweises auf die
Patenterteilung :
**30.12.86 Patentblatt 86/52**

(45) Bekanntmachung des Hinweises auf die
Entscheidung über den Einspruch :
**29.01.92 Patentblatt 92/05**

(84) Benannte Vertragsstaaten :
**AT DE FR GB IT NL SE**

(56) Entgegenhaltungen :
EP-A- 0 000 780
DD-A- 86 264
DE-A- 2 736 404
DE-A- 2 754 171
DE-B- 1 469 504
DE-B- 2 514 168
GB-A- 502 856

(56) Entgegenhaltungen :
GB-A- 1 409 821
**Chemical Abstracts Band 82, Nr. 16, 21. April
1975, Columbus, Ohio, USA, Y. KOTANI et al.
"Odor-free amino resin compositions", Seite
72, Spalte 1, Abstract Nr. 99315j
Bachmann/Bertz: "Aminoplaste" VEB
deutscher Verlag für Grundstoffindustrie, 2.
Auflage, Leipzig 1970, S. 46, 47
Scheiber: "Chemie und Technologie der
künstlichen Harze", wiss Verlagsges., Stuttgart 1943, S. 346, 347**

(73) Patentinhaber : **CASSELLA Aktiengesellschaft
Hanauer Landstrasse 526
W-6000 Frankfurt am Main 61 (DE)**

(72) Erfinder : **Keller, Karlfried, Dr.
Marktstrasse 127
W-6000 Frankfurt am Main 60 (DE)**
Erfinder : **Dörries, Peter
Hansa-Allee 80
W-6000 Frankfurt am Main 1 (DE)**

(74) Vertreter : **Urbach, Hans-Georg, Dr. et al
Hanauer Landstrasse 526
W-6000 Frankfurt am Main 61 (DE)**

EP 0 074 519 B2

Jouve, 18, rue Saint-Denis, 75001 PARIS

**Beschreibung**

Die Beschleunigung der Härtung von Melaminharzen durch Zusatz von Säuren oder Salzen ist in der Technik allgemein gebräuchlich. Besonders benötigt werden dabei sogenannte latente Härter. nach deren Zusatz zum Melaminharz bei ausreichenden Verarbeitungszeiten bei Zimmertemperatur möglichst kurze Härtungszeiten bei Verarbeitungstemperaturen von 70 bis 160 °C erzielt werden. Die Härter sollen hierbei keinen korrosiven Angriff an den metallischen Werkstoffen der Verarbeitungswerkzeuge zeigen.

Es ist bereits bekannt (europäische Patenranmeldung 0 000 780), daß Aminsalze. insbesondere Alkanolaminsalze. der schwefligen Säure als derartige latente Härter geeignet sind. Sie zeigen allerdings bei Zusatz zu Kohlenhydrate enthaltenden Aminoplastharzen den Nachteil, daß bei der Aushärtung Vergilbund auftritt.

In der Literatur bestand bisher allgemein die Auffassung, daß mineralsaure Ammoniumsalze das gewünschte latente Verhalten bei der Härtung nicht in ausreichendem Maße zeigen. Ammoniumsulfit wurde daher bisher nur zur Bindung freien oder abgespaltenen Formaldehyds verwendet, wie er sich zum Beispiel aus Harnstoffbinderharzen in Holzspanplatten (vgl. CA *86* (1977) 92155 f) oder aus Harnstoffharzen für die Textilbehandlung (vgl. GB-A-1 409 821) bildet, die pro mol Harnstoff 3.5 bis 60 mol Formaldehyd enthalten.

Aus der GB-PS 502 856 ist ein Verfahren zur Herstellung von Papier mit hoher Naßfestigkeit bekannt. bei dem das zu behandelnde Papier mit einer verdünnten, z. B. 3,75 %igen wäßrigen Lösung von Dimethylolharnstoff besprüht wird. die geringe Mengen von z. B. Ammoniumsulfit enthält. Das ness Papier wird dann auf der Papiermaschine unter Durchsaugen großer Mengen Luft getrocknet. wobei aus Wem Ammoniumsulfat durch Oxidation Schwefelsäure entsteht. die anschließend , die eigentliche Aushärtung des Harzes bewirkt. Das Papier wird abschließend zur Neutralisation der gebildeten Schwefelsäure z. B. mit einer Bicarbonatlösung behandelt und dann nochmals getrocknet. Durch dieses Verfahren wird die Verwendung von Ammoniumsulfit als Härter für wäßrige Melaminharzlösungen, wie sie als Spanplattenbinder oder Tränkharze für Schichtstoffbahnen üblich sind, nicht nahegelegt, da diese Harze, die Harzgehalte von 50 Gew.% und mehr besitzen, in geschlossenen Preßwerkzeugen praktisch ohne zutritt von Luft verarbeitet werden, so daß eine Bildung von Schwefelsäure unmöglich ist.

Es wurde nun überraschenderweise gefunden, daß das gegenüber Aminsalzen chemisch einfacher gebaute Ammoniumsulfit überlegene Eigenschaften als latenter Härter für solche mindestens 50 %ige wäßrige Melaminharzlösungen aufweist, wie sie als Spanplattenbinder oder Tränkharze für Schichtstoffbahnen üblich sind. Die Verwendung von Ammoniumsulfit ermöglicht eine deutlich raschere Härtung von solchere mindestens 50%igen wäßrigen Melaminharzlösungen, wie sie als Spanplattenbinder oder Tränkharze für Schichtstoffbahnen üblich sind, als dies mit den bekannten substituierten Aminsulfiten möglich ist. Der erfindungsgemäß zu verwendende, Ammoniumsulfit enthaltende Härter zeigt außerdem keine Vergilbungserscheinungen bei der Härtung von kohlenhydrathaltigen wäßrigen Melaminharzlösungen, sowie keine korrosiven Eigenschaften.

Die erwähnten Vorteile treten bei der erfindungsgemäßen Verwendung von Ammoniumsulfitlösungen auch dann auf, wenn diese Lösungen mit anderen bekannten salzartigen Härtern, wie z. B. Amin- bzw. Ammoniumsalzen mittelstarker bis starker Mineral- oder Carbonsäuren, kombiniert werden. Die Eigenschaften stellen sich hierbei gemäß dem jeweiligen Mischungsverhältnis ein.

Auch der Zusatz von bekannten Weichmachern für wäßrige Melaminharzlösungen, wie sie als Spanplattenbinder oder Tränkharze für Schichtstoffbahnen üblich sind, aus den Stoffklassen der mehrwertigen Alkohole. Zucker, Carbon- oder Sulfonamide zum erfindungsgemäß zu verwendenden Ammoniumsulfithärter kann Vorteile für die damit hergestellten Endprodukte, insbesondere was Elastizität und Glanz betrifft, bewirken.

Als wäßrige Melaminharzlösungen, die gehärtet werden sollen eignen sich alle in wäßriger oder wäßrig-alkoholischer Lösung vorliegenden Melaminharze, die die einen Harzgehält von mindestens 50% besonders und als Spanplattenbinder oder Melankharze für Schichtstoffbahnen verwendet werden. Inbesondere solche auf Basis von Formaldehyd-Umsetzungsprodukten des Melamins.

Der Zusatz zu den zu härtenden Harzen erfolgt am besten in der Form 10- bis 60 %iger wäßriger Lösungen des Ammoniumsulfits. Derartige Ammoniumsulfitlösungen können in besonders einfacher Weise durch Umsetzung von Schwefeldioxid mit Ammoniak in wäßriger Lösung hergestellt und unmittelbar eingesetzt werden. Als besonders vorteilhaft haben sich Ammoniumsulfitlösungen erwiesen, die auf pH-Werte zwischen 6,5 und 7,5 eingestellt wurden, da solche Lösungen völlig geruchlos und dadurch bei der Anwendung besonders umweltfeundlich sind. Es ist jedoch auch möglich, kristallines Ammoniumsulfit dem Aminoplastharz zuzusetzen. Bezogen auf Feststoffgehalt des Aminoplastharzes ist der Zusatz von 0,1 bis 5 Gew.% Ammoniumsulfit besonders vorteilhaft.

Beispiel 1

Einem unmodifizierten handelsüblichen Melamin-Formaldehyd-Tränkharz (Molverhältnis 1 : 2.6), in der

EP 0 074 519 B2

Tabelle als Harz I bezeichnet, das in 50 %iger wäßriger Lösung vorliegt, werden 0.1 0.2 und 0.4 %, bezogen auf 100 % Festharz, Ammoniumsulfit (=AS) in Form der 50 %igen neutralen Lösung zugesetzt und wird die Zeit bis zur Trübung und bis zur Härtung beim Eintauchen in ein siedendes Wasserbad gemessen. Ferner wird die Reaktivität des mit Härter versetzten Harzes bei 140 °C im zugeschmolzenen Glasrohr in bekannter Weise bestimmt.

In gleicher Weise wird Dimethylethanolammoniumsulfit (DMEAS) als 50 %ige wäßrige lösung des Salzes gemäß Beispiel 2 Wer europäischen Patentanmeldung 0 000 780 geprüft und in Mengen von 0.1, 0.2 bzw. 0.4 %. bezogen auf 100 % Festharz. eingesetz. Die gefundenen Werte der Vergleichsversuche sind in nachfolgender Tabelle aufgeführt.

Beispiel 2

In gleicher Weise, wie im Beispiel 1 angegeben, wird der Zusatz der beiden Salze zu einem stark elastifizierten Melamin-Formaldehyd-Tränkharz (Molverhältnis 1 : 1.7) in der Tabelle als Harz II bezeichnet, durchgeführt und es werden die entsprechenden Trübungs- und Härtungszeiten bestimmt. Die gefundenen Werte der Vergleichsversuche sind in der nachfolgenden Tabelle aufgeführt.

| Harz | Härter | Trübungs-/ Härtungszeit bei 100°C | Trübungszeit bei Reaktivitätstest bei 140°C |
|------|--------|-----------------------------------|---------------------------------------------|
| **Beispiel 1** | | | |
| I | – | 125/180 min | – |
| I | 0,1 % AS | 75/128 min | 300 sec. |
| I | 0,2 % AS | 18/ 30 min | 190 sec. |
| I | 0,4 % AS | 6/ 9 min | 100 sec. |
| I | 0,1 % DMEAS | 110/150 min | 360 sec. |
| I | 0,2 % DMEAS | 90/140 min | 310 sec. |
| I | 0,4 % DMEAS | 60/120 min | 290 sec. |
| **Beispiel 2** | | | |
| II | – | 170/210 min | – |
| II | 0,1 % AS | 20/ 28 min | 200 sec. |
| II | 0,2 % AS | 9/ 11 min | 110 sec. |
| II | 0,4 % AS | 5/ 6 min | 78 sec. |
| II | 0,1 % DMEAS | 90/120 min | 300 sec. |
| II | 0,2 % DMEAS | 75/100 min | 280 sec. |
| II | 0,4 % DMEAS | 50/ 60 min | 200 sec. |

**Patentansprüche**

1. Verwendung von Ammoniumsulfit als Härter solchen mindestens 50%ige wäßriger Melaminharzlösungen, wie sie als Spanplattenbinder oder Tränkharze für Schichtstoffbahnen üblich sind.

2. Verwendung von Ammoniumsulfit nach Anspruch 1, dadurch gekennzeichnet, daß es als 10- bis 60%ige neutrale wäßrige Lösung als Härter eingesetzt wird.

3. Verwendung von Ammoniumsulfit nach den Ansprüchen 1 und 2, dadurch gekennzeichnet, daß man 0,1 bis 5 Gew.% Ammoniumsulfit, bezogen auf Feststoffgehalt des Melaminharzes, einsetzt.

4. Verwendung von Ammoniumsulfit nach den Ansprüchen 1 bis 3, dadurch gekennzeichnet, daß es im

3

Gemisch mit anderen Amin- oder Ammoniumsalzen mittelstarker bis starker Säuren eingesetzt wird.

## Revendications

1. Application du sulfite d'ammonium comme durcisseur pour des solutions aqueuses à au moins 50 % de résines de mélamine, telles que celles qui sont ordinairement utilisées comme liants pour panneaux de particules ou comme résines d'imprégnation pour bandes de stratifiés.

2. Application du sulfite d'ammonium selon la revendication 1, caractérisée en ce que ce sel est utilisé comme durcisseur sous la forme d'une solution aqueuse neutre d'une concentration comprise entre 10 et 60 %.

3. Application du sulfite d'ammonium selon l'une des revendications 1 et 2, caractérisée en ce qu'on utilise de 0,1 à 5 % en poids de sulfite d'ammonium par rapport à la quantité de matière solide contenue dans la résine de mélamine.

4. Application du sulfite d'ammonium selon l'une des revendications 1 à 3, caractérisée en ce qu'on utilise ce sel en mélange avec d'autres sels d'amines ou d'ammonium dérivant d'acides moyennement forts à forts.

## Claims

1. The use of ammonium sulphite as a curing agent for aqueous melamine resin solutions of at least 50 percent strength, such as are customary as chipboard binders or impregnating resins for laminated webs.

2. The use of ammonium sulphite according to Claim 1, characterised in that it is employed as a curing agent in the form of a 10 to 60% strength neutral, aqueous solution.

3. The use of ammonium sulphite according to Claims 1 and 2, characterised in that 0.1 to 5% by weight of ammonium sulphite, relative to the solids content of the aminoplast resin, are employed.

4. The use of ammonium sulphite according to Claims 1 to 3, characterised in that it is employed as a mixture with other amine salts or ammonium salts of medium strong to strong acids.